# EUROPÄISCHE PATENTSCHRIFT

(11) **EP 2 097 252 B1**
(45) Veröffentlichungstag und Bekanntmachung des Hinweises auf die Patenterteilung: **09.06.2010**
(21) Anmeldenummer: 07847048.1
(22) Anmeldetag: 10.12.2007
(51) Int. Cl.: B29D 30/72, B60C 13/04

(54) **VERFAHREN ZUM HERSTELLEN VON WEISS- ODER FARBWANDREIFEN FÜR KRAFTFAHRZEUGE**
METHOD FOR THE PRODUCTION OF WHITE- OR COLOURED-WALL TYRES FOR MOTOR VEHICLES
PROCÉDÉ DE FABRICATION DE BANDAGES À FLANC BLANC OU COLORÉ POUR VÉHICULES AUTOMOBILES

(30) Priorität: 13.12.2006 DE 102006058844
(43) Veröffentlichungstag der Anmeldung: 09.09.2009
(73) Patentinhaber: Schaal, Valentin, 82054 Sauerlach (DE)
(72) Erfinder: Schaal, Valentin, 82054 Sauerlach (DE)
(74) Vertreter: Schoppe, Fritz
(86) Internationale Anmeldenummer: PCT/EP2007/010757
(87) Internationale Veröffentlichungsnummer: WO 2008/071372

(56) Entgegenhaltungen:
- EP-A- 0 448 903
- DE-U- 1 811 311
- US-A- 2 746 515
- US-A- 2 979 099
- US-A- 4 461 795
- US-A- 4 869 759
- US-A- 5 058 647
- US-A- 5 300 164

## Beschreibung

Die vorliegende Erfindung befasst sich mit einem Verfahren zum Herstellen von Weiß- und Farbwandreifen für Kraftfahrzeuge. Insbesondere befasst sich die vorliegende Erfindung mit der Herstellung eines Weiß- und Farbwandreifens für Kraftfahrzeuge durch nachträgliche Bearbeitung eines bereits fertig gestellten Kraftfahrzeugreifens, der jedoch nicht über eine Weißwand oder eine Farbwand verfügt.

Aus dem DE-1811311-U ist bereits ein Verfahren zum Herstellen eines Kraftfahrzeugreifens durch nachträgliches Anbringen eines Weißwandringes bekannt. Bei dem bekannten Verfahren wird ein vulkanisierter Weißwandring unter Zwischenlage eines zunächst unvulkanisierten, breiteren, schwarzen Kautschukunterlagestreifens auf einen Seitenwandbereich eines Kraftfahrzeugreifens aufvulkanisiert.

Bei dem bekannten Verfahren wird die Seitenfläche des Kraftfahrzeugreifens zunächst geraut und sodann der aus weichem, unvulkanisierten Kautschuk bestehende Unterlagestreifen auf die Seitenfläche oder Seitenwandung des Kraftfahrzeugreifens aufgeklebt. Nun wird mittels eines Vulkanisiervorganges unter Wärme- und Druckeinwirkung der vorgefertigte, bereits vulkanisierte Weißwandring aufgebracht, wobei der unvulkanisierte Auflagestreifen über die radialen Enden des Weißwandringes nach beiden Seiten hinausragt. Während des Vulkanisiervorganges verlaufen die Enden des Unterlagestreifens, wodurch der Weißwandring in die verlaufenden Bereiche des Unterlagestreifens eingebettet und mit diesen durch den Vulkanisationsvorgang verschweißt wird. Der mit diesem bekannten Verfahren hergestellte Weißwandreifen erwies sich jedoch in mehrfacher Hinsicht als verbesserungswürdig. Einerseits musste der Weißwandring eine relativ hohe Wandstärke aufweisen, um den mechanischen Beanspruchungen bei dem bekannten Herstellungsverfahren Stand halten zu können. Der mittels des bekannte Verfahrens mit einem Weißwandring modifizierte Kraftfahrzeugreifen hatte einen erheblichen einseitigen Gewichtszuwachs. Andererseits war der Übergangsbereich zwischen dem Weißwandring und der Seitenwand des Reifens kantig. Ein wesentliches Problem bei dem bekannten Verfahren liegt darin, dass bereits nach kurzer Betriebsdauer des Weißwandreifens sich eine Verfärbung der Weißwand bemerkbar macht.

Ein solches Verfahren ist auch aus der US 4 869 759-A bekannt.

Der vorliegenden Erfindung liegt somit die Aufgabe zugrunde, ein verbessertes Verfahren zum Herstellen von Weiß- und Farbwandreifen für Kraftfahrzeuge zu schaffen.

Diese Aufgabe wird durch ein Verfahren gemäß Anspruch 1 gelöst.

Bei dem erfindungsgemäßen Verfahren wird ein mehrschichtiger Wandstreifen mit einer nicht-vulkanisierten Kontaktgummischicht, einer Sperrschicht und einer nicht-vulkanisierten Weiß- und Farbwandgummischicht auf einen Seitenwandbereich des Reifens aufvulkanisiert.

Bei dem erfindungsgemäßen Verfahren kommt es zu einem Verfließen der nicht-vulkanisierten Weiß- oder Farbwandgummischicht, wobei vorzugsweise durch erhöhten Anpressdruck einer Vulkanisationsform im Bereich der Kanten des Wandstreifens verglichen mit dem Anpressdruck in den Mittenbereich einer Abflachung der Schichtdicke der Weiß- und Farbwand in ihrem Kantenbereich verglichen mit der Schichtdicke in deren Mittenbereich erzielt wird. Bei dem sich einstellenden Fließvorgang überläuft der verfließende Kantenbereich der Weiß- oder Farbwandgummischicht die darunter liegenden Bereiche der Sperrschicht und Kontaktgummischicht, so dass die Mehrschichtigkeit des Aufbaus der Weiß- und Farbwand nach Fertigstellung des Weiß- und Farbwandreifens für den Betrachter verborgen bleibt. Die Sperrschicht verhindert ein Ausdiffundieren von Schwefel aus dem Reifen in die Weiß- und Farbwandgummischicht, wodurch aufgrund des erfindungsgemäßen Verfahrens eine Verfärbung des Weiß- bzw. Farbwandgummis verhindert wird.

Bevorzugte Weiterbildungen des erfindungsgemäßen Verfahrens sind in den Unteransprüchen definiert.

Nachfolgend werden unter Bezugnahme auf die beiliegenden Zeichnungen bevorzugte Ausführungsbeispiele der vorliegenden Erfindung näher erläutert. Es zeigen:

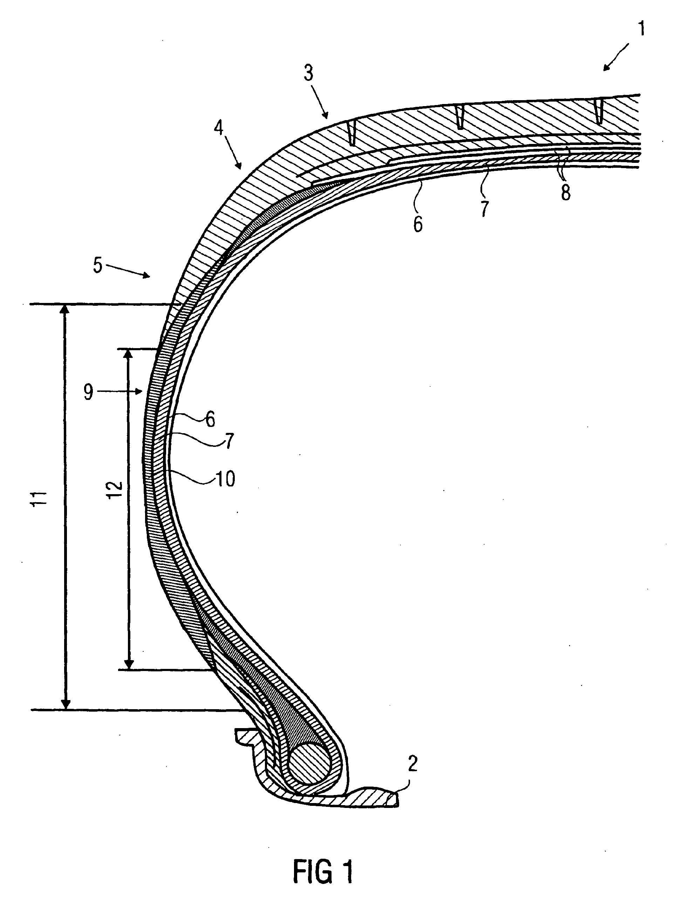

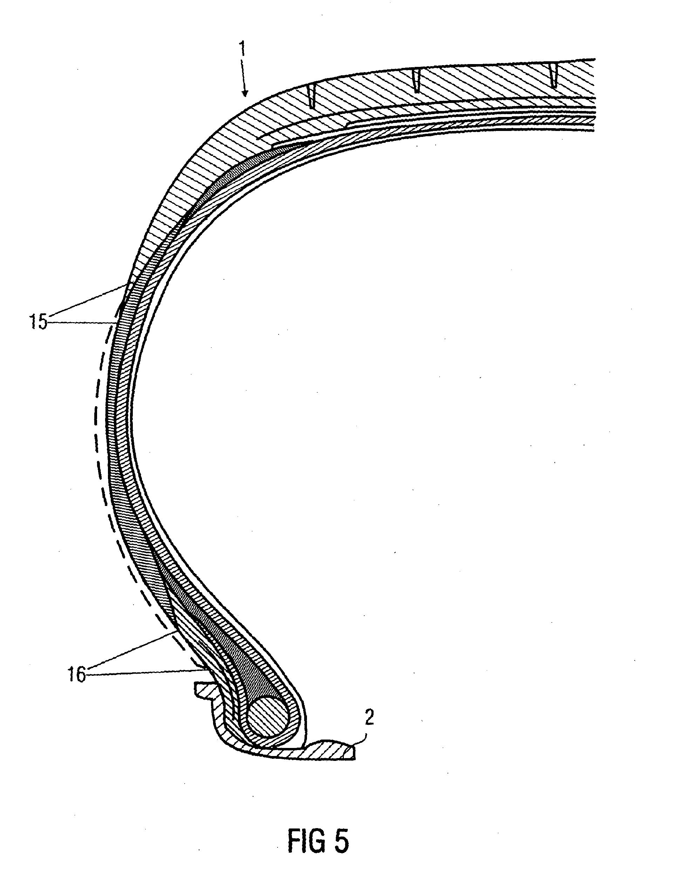

- Fig. 1 bis 6: Schnittdarstellungen durch einen Radialreifen bei den jeweiligen Schritten des erfindungsgemäßen Verfahrens.

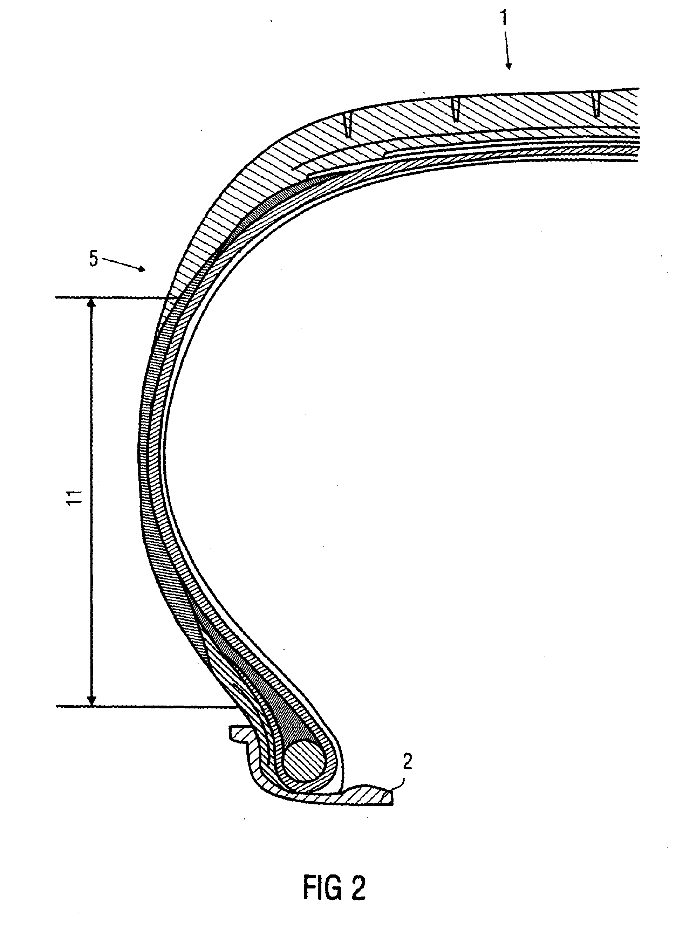

Innerhalb der jeweiligen Figuren bezeichnen gleiche Bezugszeichen gleiche Teile, so dass nachfolgend bei den Figuren 2 bis 6 nur die jeweiligen Änderungen zu erläutern sind, die bezogen auf den Ursprungszustand eines in Fig. 1 gezeigten üblichen Reifens sich durch das erfindungsgemäße Verfahren ergeben.

Der grundsätzliche Aufbau des in Fig. 1 gezeigten, an sich üblichen Radialreifens ist dem Fachmann auf dem Gebiet der Reifentechnologie an sich bekannt, so dass der Aufbau nur kursorisch erläutert wird. Ein Reifen, der in seiner Gesamtheit mit dem Bezugszeichen 1 bezeichnet ist, wird von einer Felge 2 getragen. Der Reifen hat eine Lauffläche 3, die über eine Schulterzone 4 in eine Seitenwand 5 übergeht. Der mehrschichtige Reifenaufbau umfasst eine Innenplatte 6, eine Karkasse 7 und einen Stahlgürtel 8. Im Seitenwandbereich 9 umfasst der Aufbau die bereits erwähnte Innenplatte 6, die bereits erwähnte Karkasse 7 sowie einen Seitenstreifen 10.

Mit dem Bezugszeichen 11 ist ein Bereich für die spätere Weiß- bzw. Farbwandbearbeitung bezeichnet. Das Bezugszeichen 12 gibt einen späteren Bereich für die noch zu erläuternde fertig aufvulkanisierte Weiß- bzw. Farbwand nach deren Endbearbeitung an.

Der zu bearbeitende Reifen 1 wird entweder, wie dies in den Fig. 1 bis 6 schematisch dargestellt ist, auf die Felge 2 aufgespannt oder, was aus Gründen der Effizienz der Bearbeitung für bevorzugt angesehen wird, auf eine (nicht dargestellte), an sich übliche Reifenspannvorrichtung aufgelegt, der im Bereich der Vulkanisiertechnik auch als sog. "Expandamatic"-Reifenspanner bekannt ist, und mit einem Luftdruck von beispielsweise 2,5 Bar befüllt. Mit einer an sich bekannten Aufraumaschine, die auf einer Abrautiefe von 0,3 bis 0,8 mm, vorzugsweise von 0,5 mm eingestellt ist, wird die zunächst im Wesentlichen glatte Oberfläche der Seitenwand 5 in dem mit dem Bezugszeichen 11 bezeichneten Bereich für die Weiß- bzw. Farbwandbearbeitung aufgeraut. Bei diesem Aufrauprozess werden nötiger Weise auch die in dem genannten Bereich 11 bei dem ursprünglichen Reifen vorgesehenen Reifenkennzeichnungen abgetragen und eingeebnet. In diesem Zustand wird der Reifen von der Felge 2 bzw. von der Reifenspannvorrichtung (nicht dargestellt) abgenommen, gereinigt und in dem genannten Bereich 11 für die Weiß- bzw. Farbwandbearbeitung, mit einer Haftvermittlerlösung eingespritzt. Bei der Haftvermittlerlösung kann es sich um eine selbstvulkanisierende Gummilösung handeln. Vorzugsweise wird der Reifen in dem so bearbeiteten Zustand für eine Zeit zwischen 30 und 180 min., vorzugsweise von ca. 60 min zur Trocknung in einem staubdichten, auf eine Temperatur zwischen 30 und 50°C aufgeheizten Raum abgestellt.

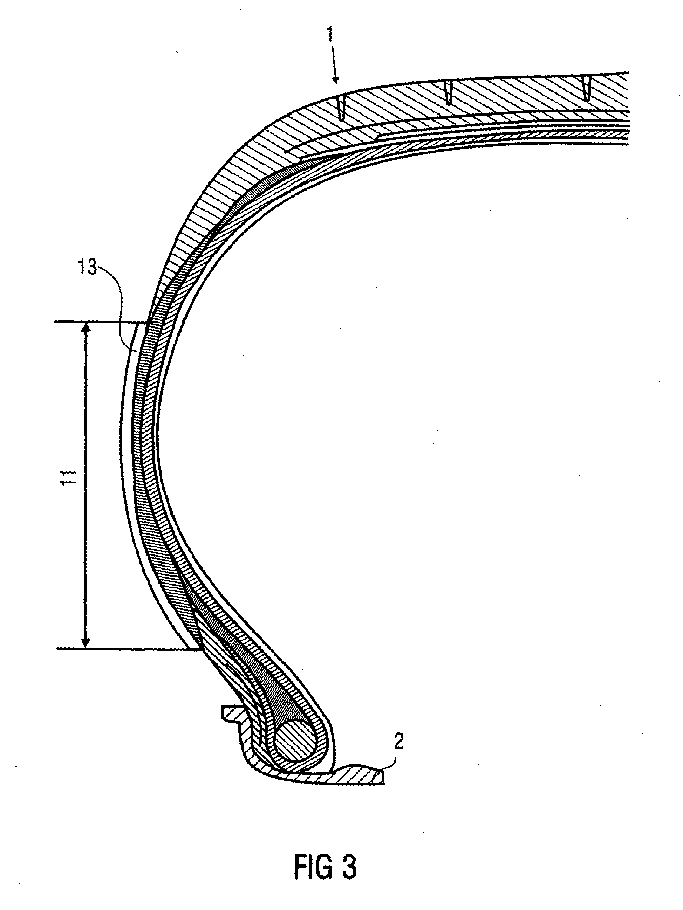

Sodann wird der Reifen, wie dies in Fig. 3 verdeutlicht ist, erneut auf die Felge 2 bzw. eine (nicht gezeigte) Reifenspannvorrichtung aufgelegt und abermals mit Luft befüllt. Bei diesem relativ kurzen Arbeitsgang sinkt die Temperatur des aufgeheizten Reifens nur geringfügig ab, was dem späteren Vulkanisationsprozess zuträglich ist. Der Reifen wird erneut mit Luft bei einem geeigneten Luftdruck von vorzugsweise 2,5 Bar befüllt. Nun erfolgt das Aufbringen eines mehrschichtigen Wandstreifens 13 auf den Bereich 11 für die Weiß- oder Farbwandbearbeitung. Der mehrschichtige Wandstreifen 13 umfasst eine nicht-vulkanisierte Kontaktgummischicht auf der der Seitenwand 5 zugewandten Seite des Wandstreifens 13, eine auf der Kontaktgummischicht angeordnete Sperrschicht und eine auf der Sperrschicht angeordnete, nicht-vulkanisierte Weiß- oder Farbwandgummischicht.

Die genannte Schichtenstruktur ist in der schematischen Darstellung der Fig. 3 nicht im Einzelnen gezeigt. Die nicht-vulkanisierte Kontaktgummischicht hat eine Schichtdicke zwischen 0,1 mm und 2,0 mm. Die Sperrschicht hat eine Schichtdicke zwischen 0,1 mm und 2,0 mm. Die nicht-vulkanisierte Weißwandgummischicht hat eine bevorzugte Schichtdicke zwischen 3,0 mm und 8,0 mm.

Vorzugsweise wird der mehrschichtige Wandstreifen 13 von zunächst rechteckiger Ausgangsform auf dem Seitenwandbereich 9 des Reifens 1 in tangentialer Richtung verlaufend aufgebracht und anschließend abgelängt. Bei einem Ausführungsbeispiel wird das plattenförmige mehrschichtige Material, aus dem der mehrschichtige Wandstreifen 13 gewonnen wird, auf einer Schneidemaschine in Gummistreifen von entsprechender Länge und Breite geschnitten. Im Falle eines 15-Zoll-Reifens beträgt die Streifenbreite in radialer Richtung 45 mm und die Streifenlänge in tangentialer Richtung 1507 mm. Bei einem Abstand von 20 mm zur Reifenwulst und bei 40 mm Überlappung ergibt sich eine unbearbeitete Länge des Streifens von 1547 mm. Die ursprüngliche Breite von 45 mm in radialer Richtung entspricht einer Breite der Weißwand von 40 mm nach dem Aufvulkanisieren und Fertigverarbeiten (was noch zu erläutern ist).

Mit einer Vorrichtung zum Führen des Wandstreifens 13 wird dieser auf dem Bereich 11 für die Weiß-Farbwandbearbeitung durch Ziehen in tangentialer Richtung ringförmig aufgelegt. Der so aufgelegte Rohgummiring muss nun in tangentialer Richtung, also an seinen lateralen Enden, geschlossen werden. Der mehrschichtige Wandstreifen 13 ist zunächst im Übermaß in seiner tangentialen Längserstreckung derart abgelängt, dass die nun übereinander liegenden Enden des Streifens einen Überstand von beispielsweise 2 cm aufweisen. Die Enden werden mit einer "Zick-Zack-Schere" übereinanderliegend auf die richtige Länge gebracht, so dass die Enden im Reißverschlussverfahren ineinander greifen, woraufhin die zick-zack-förmig ineinander greifenden Enden mit einem Flachmeißel ineinander verdichtet werden, wobei sich bei dem anschließend durchzuführenden Vulkanisationsprozess eine innige Verbindung ergibt, aufgrund der die "Zick-Zack"-Stoßstelle des Wandstreifens nicht mehr als solche zu erkennen ist.

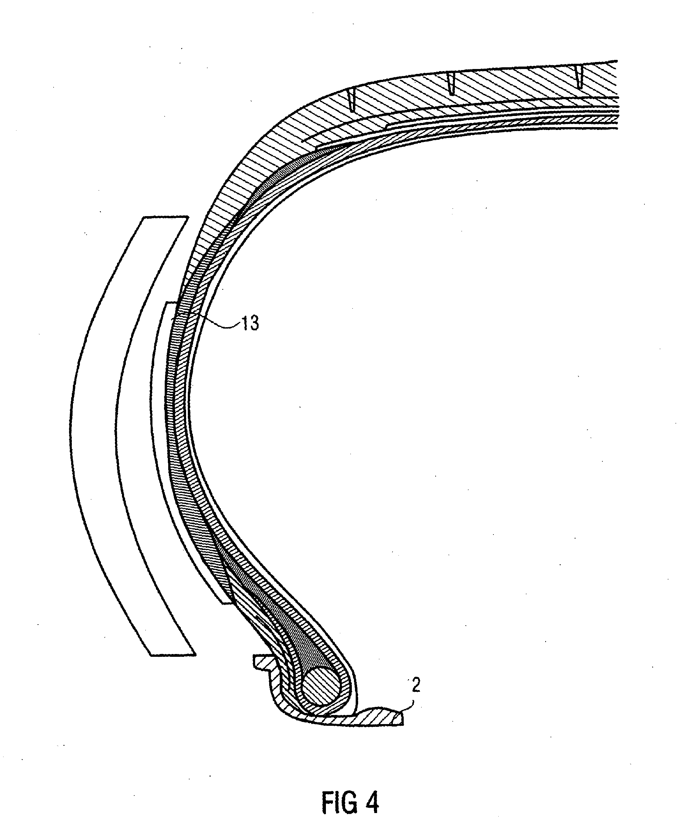

Nunmehr erfolgt, wie dies in Fig. 4 schematisch dargestellt ist, ein Vulkanisationsvorgang durch Anpressen einer größenbezogenen bzw. durchmesserbezogenen Vulkanisationsform 14, die auf eine Heiztemperatur von 150°C ± 3°C gebracht ist, bei einem Druck von 4 Bar und einer Heizzeit von vorzugsweise 12 min. ± 3 min. Während des Vulkanisationsprozesses ist der Reifen von der Felge 2 bzw. von der Spannvorrichtung abgenommen.

Der Verlauf der Innenkontur der Vulkanisationsform 14 ist derart ausgebildet, dass der Anpressdruck der Vulkanisationsform 14 im Bereich der Kanten des Wandstreifens 13 verglichen mit dem Anpressdruck in dessen Mittenbereich derart erhöht ist, dass die Weiß- oder Farbwandgummischicht beim Aufvulkanisieren im Bereich der Kanten des Wandstreifens verfließt und dort eine Verglichen mit einer Schichtdicke vor dem Aufvulkanisieren geringere Schichtdicke annimmt. Vorzugsweise sind Anpressdruck und Anpresstemperatur und Anpressdauer bis Vulkanisationsverfahrens sowie die Gestalt der Vulkanisationsform 14 derart gewählt, dass der mehrschichtige Wandstreifen 13 in seinem Mittenbereich gegenüber seiner Rohform nur geringfügig im Bereich von etwa 10 bis 15 % an seiner Materialstärke verliert, wogegen sich das Rohgummimaterial an den jeweiligen Übergangsstellen radialer Richtung zum Unterbau verjüngt, wodurch sich ein Überlauf der Rohgummimenge von etwa 2 bis 3 mm beidseitig der ursprünglichen Kante des nicht-vulkanisierten Rohgummi-Wandstreifens (Fig. 3) im Bereich des Bereichs 11 ergibt.

Nach Durchführung des in Fig. 4 versinnbildlichten Vulkanisationsprozesses ist die aufgebrachte Gummischicht fest, aber elastisch mit dem Reifen verbunden und zeigt beidseitig einen Materialauslauf in dem Materialauslauf-Bereichen 15, 16.

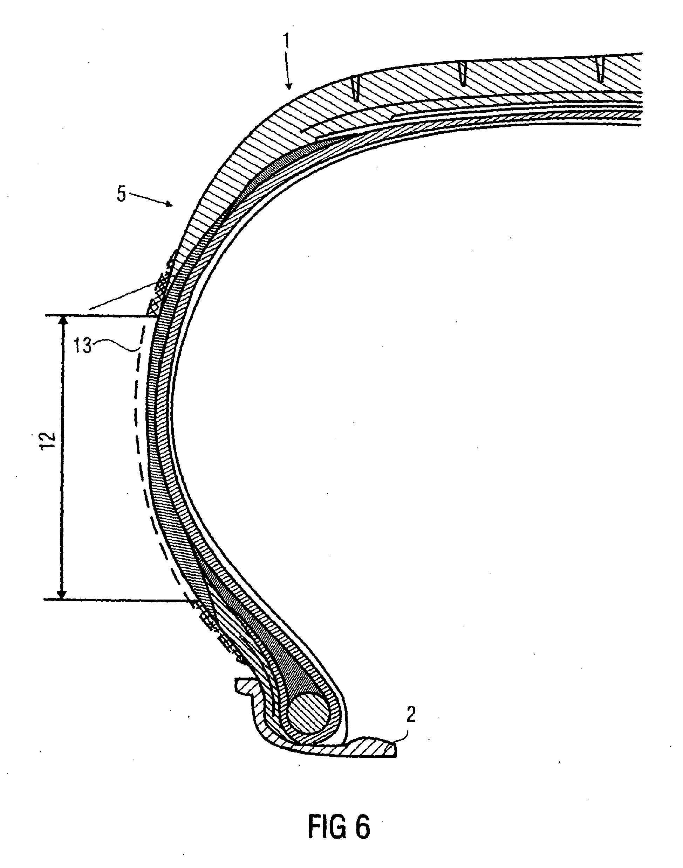

Für die Durchführung der nachfolgend zu beschreibenden Endverarbeitung (vgl. Fig. 6) wird der Reifen 1 erneut auf die Felge 2 oder die Spannvorrichtung aufgelegt. Mittels einer programmierten Raumaschine erfolgt ein zumindest teilweises Abschleifen oder Abrauen des Materialüberlaufs im Bereich der Materialauslaufbereiche 15, 16 auf eine derartige Breite, dass sich die gewünschte Endbreite des Bereichs 12 für die Weiß- bzw. Farbwand nach Endbearbeitung ergibt.

Mit anderen Worten wird eine exakte Trennkante erstellt, welche die gewünschte Breite des Weiß- bzw. Farbwandstreifens festlegt. Nach Durchführung dieses abschließenden Rauprozesses werden die radial oberhalb und unterhalb der Weiß- bzw. Farbwand 13 befindlichen Bereiche gereinigt, und mit einer selbstvulkanisierenden schwarzen Gummilösung der unbearbeiteten Seitenwand 5 des Reifens optisch angeglichen.

Optional wird anschließend die aufvulkanisierte Weiß- bzw. Farbwandfläche auf dem Reifen mit einem Schutzfilm überzogen, so dass diese vor Verschmutzung und Verfärbung durch UV-Strahlung geschützt ist.

In Abweichung von dem soeben beschriebenen Verfahren, das zur Erzeugung eines in seiner Oberfläche unstrukturierten Weiß- bzw. Farbwandbereichs dient, ist es möglich, durch geeignete Profilierung der Vulkanisationsform 14 an deren Innenseite Reifenkennzeichnungen in die Weiß- bzw. Farbwand einzuprägen, und zwar derart, dass die Kennzeichnung für alle Weißwandbreiten im jeweiligen Durchmesser gegeben ist (z.B. 15 Zoll) für alle Größen und Weißwandbreiten im Bereich von 10 bis 80 mm ab dem Reifenwulst. Die Kennzeichnung mit den jeweiligen Reifendaten erfolgt mit einem wechselbaren Einlegeplättchen (nicht dargestellt), auf dem die gewünschten Daten in Spiegelschrift eingraviert sind. Das Einlegeplättchen fügt sich genau in eine ausgefräste Vertiefung der Vulkanisationsform 14 ein, so dass die von der Vulkanisationsform definierte ebene Fläche nicht oder nur unwesentlich beeinträchtigt wird. Die Befestigung des Einlegeplättchens (nicht dargestellt) in der Vulkanisationsform 14 erfolgt durch eine Schraub- oder sogenannte Klick-Befestigung. Bei den eingeprägten Kennzeichnungen kann es sich insbesondere um die ursprünglichen Angaben des Reifens bezüglich Fabrikat, Größe, Ausführung und Profilbezeichnung sowie bezüglich des Herstellers handeln. Ferner ist es möglich, Herstelldaten, Fertigungschargen und den Hersteller der Weiß- bzw. Farbwand aufzunehmen.

Sowohl die Weißwand wie auch die Farbwand kann fluoreszierend ausgeführt sein. Die fluoreszierende Wirkung wird durch Einbringen von fluoreszierenden Stoffen, in die Weiß- und Farbwandgummischicht erreicht.

Wahlweise kann anstelle des Einprägens der genannten Kennzeichnungen ein Anbringen einer sog. "Vulkanette" oberhalb oder unterhalb des mehrschichtigen Wandstreifens 13 erfolgen.

## Patentansprüche

1. Verfahren zum Herstellen eines einen Weiß- oder Farbwandring an seinem Seitenwandbereich (11) aufweisenden Weiß- oder Farbwandreifens für Kraftfahrzeuge, mit folgenden Schritten:
- Bereitstellen eines Reifens (1)mit einer Seiten wand (5);
- Bereitstellen eines mehrschichtigen Wandstreifens (13) mit einer nicht-vulkanisierten Kontaktgummischicht, einer Sperrschicht und einer nicht-vulkanisierten Weiß- oder Farbwandgummischicht und
- Aufvulkanisieren des mehrschichtigen Wandstreifens auf einen Bereich (11) der Seitenwand (5) des Reifens (1).

2. Verfahren nach Anspruch 1, mit dem Schritt des Aufrauens des Bereichs (11) der Seitenwand (5) vor dem Aufvulkanisieren.

3. Verfahren nach Anspruch 2, mit dem Schritt des Aufbringens eines Haftvermittlers auf den aufgerauten Seitenwandbereich.

4. Verfahren nach einem der Ansprüche 1 bis 3, bei dem der mehrschichtige Wandstreifen (13) bei dem Aufvulkanisieren unter Wärmeeinwirkung mittels einer Vulkanisationsform (14) gegen den Bereich (11) der Seitenwand (5) des Reifens (1) angepresst wird.

5. Verfahren nach Anspruch 4, bei dem die Vulkanisationsform (14) derart ausgebildet ist, dass deren Anpressdruck im Bereich der Kanten des Wandstreifens (13) verglichen mit dem Anpressdruck in dessen Mittenbereich derart erhöht ist, dass die Weiß- oder Farbwandgummischicht beim Aufvulkanisieren im Bereich der Kanten des Wandstreifens (13) verfließt und dort eine verglichen mit ihrer Schichtdicke vor dem Aufvulkanisieren geringere Schichtdicke annimmt.

6. Verfahren nach einem der Ansprüche 1 bis 5, bei dem der mehrschichtige Wandstreifen (13) von zunächst rechteckiger Ausgangsform auf den Bereich (11) der Seitenwand (5) des Reifens (1) in tangentialer Richtung verlaufend aufgebracht wird und anschließend abgelängt wird.

7. Verfahren nach Anspruch 6, bei dem das Ablängen mittels eines Zick-Zack-Schnittes an den beiden lateralen Enden des mehrschichtigen Wandstreifens (13) erfolgt.

8. Verfahren nach Anspruch 6 oder 7, bei dem nach Durchführen des Zick-Zack-Schnittes die Enden des Wandstreifens mittels eines Flachmeißel ineinander verdichtet werden.

9. Verfahren nach Anspruch 5, bei dem die radial innere und radial äußere Kante der Weiß- oder Farbwand durch Abfräsen, Abschleifen oder Abrauen des verflossenen Kantenbereichs gebildet wird.

10. Verfahren nach Anspruch 9, mit dem Verfahrensschritt des Aufbringens einer selbstvulkanisierenden Gummilösung auf die Seitenwand (5) des Reifens radial innerhalb und radial außerhalb der Weiß- oder Farbwand.

11. Verfahren nach einem der Ansprüche 1 bis 10, bei dem Reifenkennzeichnungen des ursprünglich bereitgestellten Reifens auf die Weiß- oder Farbwand aufgebracht werden.

12. Verfahren nach Anspruch 11 in Rückbeziehung auf Anspruch 4, bei dem das Aufbringen der Reifenkennzeichnungen auf die Weiß- oder Farbwand durch in die Vulkanisationsform (14) eingebrachte Einlegeplättchen für die jeweiligen Kennzeichnungen in einem Bereich zwischen 10 mm und 80 mm radial von der Reifenwulst beabstandet erfolgt oder bei dem das Aufbringen der Reifenkennzeichnung durch Einprägen derselben mittels der Vulkanisationsform (14) erfolgt.

13. Verfahren nach Anspruch 12, bei dem das Aufbringen der Reifenkennzeichnungen durch Aufbringen einer sog. Vulkanette oberhalb oder unterhalb des mehrschichtigen Wandstreifens (13) erfolgt.

14. Verfahren nach einem der Ansprüche 1 bis 13, bei dem die Kontaktgummischicht eine Schichtdicke von 0,1 bis 2,0 mm vor dem Aufvulkanisieren des mehrschichtigen Wandstreifens (13) aufweist.

15. Verfahren nach einem der Ansprüche 1 bis 14, bei dem die Sperrschicht eine Schichtdicke von 0,1 bis 2,0 mm vor dem Aufvulkanisieren des mehrschichtigen Wandstreifens (13) aufweist.

16. Verfahren nach einem der Ansprüche 1 bis 14, bei dem die Weiß- oder Farbwandgummischicht eine Schichtdicke von 3,0 bis 8,0 mm vor dem Aufvulkanisieren des mehrschichtigen Wandstreifens (13) aufweist.

17. Verfahren nach Anspruch 16, bei dem die Sperrschicht aus einem gegen Schwefeldiffusion dichten Material besteht.

## Claims

1. A method of producing a white-wall or colored-wall tire for motor vehicles comprising a white-wall or colored-wall ring on its sidewall region (11), comprising the steps of:
- providing a tire (1) having a sidewall (5);
- providing a multi-layered wall strip (13) having a non-vulcanized contact rubber layer, a barrier layer and a non-vulcanized white-wall or colored-wall rubber layer; and
- vulcanizing the multi-layered wall strip onto a region (11) of the sidewall (5) of the tire (1).

2. The method in accordance with claim 1, comprising the step of roughening the region (11) of the sidewall (5) before vulcanizing.

3. The method in accordance with claim 2, comprising the step of applying a coupling agent onto the roughened sidewall region.

4. The method in accordance with one of claims 1 to 3, wherein the multi-layered wall strip (13), when vulcanizing, is pressed against the region (11) of the sidewall (5) of the tire (1) under the influence of heat using a vulcanizing mold (14).

5. The method in accordance with claim 4, wherein the vulcanization mold (14) is implemented such that the contact pressure thereof is increased in the region of the edges of the wall strip (13) compared to the contact pressure in the central region thereof such that the white-wall or colored-wall rubber layer, when vulcanizing, becomes flowing in the region of the edges of the wall strip (13) and takes on, compared to its layer thickness before vulcanizing, a reduced layer thickness.

6. The method in accordance with one of claims 1 to 5, wherein the multi-layered wall strip (13) of an, at first, rectangular starting shape is applied onto the region (11) of the side wall (5) of the tire (1) in a tangential direction of course and is cut into lengths subsequently.

7. The method in accordance with claim 6, wherein cutting is done using a zigzag cut at the two lateral ends of the multi-layered wall strip (13).

8. The method in accordance with claims 6 or 7, wherein, after performing the zigzag cut, the ends of the wall strip are compressed into each other using a flat chisel.

9. The method in accordance with claim 5, wherein the radial inner and radial outer edges of the white or colored wall are formed by milling off, grinding off or rasping off the flowing edge region.

10. The method in accordance with claim 9, comprising the method step of applying a self-vulcanizing rubber solution onto the sidewall (5) of the tire, radially inside and radially outside the white or colored wall.

11. The method in accordance with one of claims 1 to 10, wherein tire markings of the originally provided tire are applied onto the white or colored wall.

12. The method in accordance with claim 11, when dependent on claim 4, wherein applying the tire markings onto the white or colored wall is performed by small insert plates for the respective markings introduced in the vulcanization mold (14) in a range in a radial distance between 10 mm and 80 mm from the tire bead, or wherein applying the tire marking is performed by imprinting same using the vulcanization mold (14).

13. The method in accordance with claim 12, wherein applying the tire markings is performed by applying a so-called vulcanette element above or below the multi-layered wall strip (13).

14. The method in accordance with one of claims 1 to 13, wherein the contact rubber layer, before vulcanizing the multi-layered wall strip (13), comprises a layer thickness between 0.1 mm and 2.0 mm.

15. The method in accordance with one of claims 1 to 14, wherein the barrier layer, before vulcanizing the multi-layered wall strip (13), comprises a layer thickness between 0.1 mm and 2.0 mm.

16. The method in accordance with one of claims 1 to 14, wherein the white-wall or colored-wall rubber layer, before vulcanizing the multi-layered wall strip (13), comprises a layer thickness between 3.0 mm and 8.0 mm.

17. The method in accordance with claim 16, wherein the barrier layer consists of a sulfur diffusion-tight material.

## Revendications

1. Procédé de fabrication d'un pneu à flanc blanc ou coloré pour véhicules automobiles présentant dans sa zone de flanc latéral (11) un anneau de flanc blanc ou coloré, aux étapes suivantes consistant à:
- préparer un pneu (1) avec un flanc (5);
- préparer un bandage de flanc multicouche (13) avec une couche de caoutchouc de contact non vulcanisée, une couche barrière et une couche de caoutchouc de flanc blanche ou colorée non vulcanisée, et
- vulcaniser le bandage de flanc multicouche sur une zone (11) du flanc latéral (5) du pneu (1).

2. Procédé selon la revendication 1, avec l'étape de rugosification de la zone (11) du flanc latéral (5) avant la vulcanisation.

3. Procédé selon la revendication 2, avec l'étape d'application d'un agent d'accrochage sur la zone de flanc latéral rendue rugueuse.

4. Procédé selon l'une des revendications 1 à 3, dans lequel le bandage de flanc multicouche (13) est, lors de la vulcanisation sous l'effet de la chaleur à l'aide d'un moule de vulcanisation (14), pressé contre la zone (11) du flanc latéral (5) du pneu (1).

5. Procédé selon la revendication 4, dans lequel le moule de vulcanisation (14) est réalisé de sorte que sa pression de contact dans la zone des bords du bandage de flanc (13) soit augmentée, comparé à la pression de contact dans sa zone centrale de sorte que la couche de caoutchouc de flanc blanche ou colorée flue, lors de la vulcanisation, dans la zone des bords du bandage de flanc (13) et y adopte, comparé à son épaisseur de couche avant la vulcanisation, une épaisseur de couche plus faible.

6. Procédé selon l'une des revendications 1 à 5, dans lequel le bandage de flanc multicouche (13) est appliqué, à partir d'une forme de départ tout d'abord rectangulaire, en s'étendant en direction tangentielle sur la zone (11) du flanc latéral (5) du pneu (1) et est ensuite coupé à longueur.

7. Procédé selon la revendication 6, dans lequel la coupe à longueur a lieu à l'aide d'une coupe en zigzag aux deux extrémités latérales du bandage de flanc multicouche (13).

8. Procédé selon la revendication 6 ou 7, dans lequel, après la réalisation de la coupe en zigzag, les deux extrémités du bandage de flanc sont compactées l'une dans l'autre au moyen d'un outil plat.

9. Procédé selon la revendication 5, dans lequel le bord radialement intérieur et le bord radialement extérieur du flanc blanc ou coloré sont formés par fraisage, meulage ou rugosification de la zone de bord fluée.

10. Procédé selon la revendication 9, avec l'étape de procédé de l'application d'une solution de caoutchouc auto-vulcanisante sur le flanc latéral (5) du pneu radialement à l'intérieur et radialement à l'extérieur du flanc blanc ou coloré.

11. Procédé selon l'une des revendications 1 à 10, dans lequel les identifications du pneu préparé à l'origine sont appliquées sur le flanc blanc ou coloré.

12. Procédé selon la revendication 11, en rapport avec la revendication 4, dans lequel l'application des identifications de pneu sur le flanc blanc ou coloré a lieu par les plaquettes inserts placées dans le moule de vulcanisation (14) pour les identifications respectives dans une zone comprise entre 10 mm et 80 mm distante radialement du talon de pneu ou dans lequel l'application de l'identification de pneu a lieu par gravure de celle-ci à l'aide du moule de vulcanisation (14).

13. Procédé selon la revendication 12, dans lequel l'application des identifications de pneu a lieu par application d'une soi-disant vulcanette au-dessus ou au-dessous du bandage de flanc multicouche (13).

14. Procédé selon l'une des revendications 1 à 13, dans lequel la couche de caoutchouc de contact présente une épaisseur de couche de 0,1 à 2,0 mm avant la vulcanisation du bandage de flanc multicouche (13).

15. Procédé selon l'une des revendications 1 à 14, dans lequel la couche barrière présente une épaisseur de couche de 0,1 à 2,0 mm avant la vulcanisation du bandage de flanc multicouche (13).

16. Procédé selon l'une des revendications 1 à 14, dans lequel la couche de caoutchouc de flanc blanche ou colorée présente une épaisseur de couche de 3,0 à 8,0 mm avant la vulcanisation du bandage de flanc multicouche (13).

17. Procédé selon la revendication 16, dans lequel la couche barrière est réalisée en un matériau étanche à la diffusion de soufre.
